(19) Europäisches Patentamt / European Patent Office / Office européen des brevets

(11) **EP 2 957 975 B1**

(12) **FASCICULE DE BREVET EUROPEEN**

(45) Date de publication et mention de la délivrance du brevet:
**02.05.2018 Bulletin 2018/18**

(51) Int Cl.:
**B64D 31/06** (2006.01)  **G01C 23/00** (2006.01)

(21) Numéro de dépôt: **15168729.0**

(22) Date de dépôt: **21.05.2015**

(54) **PROCÉDÉ ET DISPOSITIF DE COMMANDE D'AU MOINS UN SYSTÈME DE CONTRÔLE D'ACTIONNEUR D'UN AÉRONEF, PRODUIT PROGRAMME D'ORDINATEUR ET AÉRONEF ASSOCIÉS**

STEUERVERFAHREN UND -VORRICHTUNG MINDESTENS EINES KONTROLLSYSTEMS EINES STELLGLIEDS EINES LUFTFAHRZEUGS, ENTSPRECHENDES COMPUTERPROGRAMM-PRODUKT UND ENTSPRECHENDES LUFTFAHRZEUG

METHOD AND DEVICE FOR CONTROLLING AT LEAST ONE ACTUATOR CONTROL SYSTEM OF AN AIRCRAFT, RELATED COMPUTER PROGRAM PRODUCT AND AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2014 FR 1401358**

(43) Date de publication de la demande:
**23.12.2015 Bulletin 2015/52**

(73) Titulaire: **THALES**
**92400 Courbevoie (FR)**

(72) Inventeurs:
• **Lissajoux, Sylvain**
**31036 TOULOUSE CEDEX 1 (FR)**
• **Claybrough, Matthieu**
**31036 TOULOUSE CEDEX 1 (FR)**
• **Garnavault, Christophe**
**92362 MEUDON LA FORET (FR)**

(74) Mandataire: **Lavoix**
**2, place d'Estienne d'Orves**
**75441 Paris Cedex 09 (FR)**

(56) Documents cités:
**US-A- 5 079 711    US-A1- 2011 238 277**
**US-B1- 6 246 929    US-B1- 6 262 674**

EP 2 957 975 B1

**Description**

La présente invention concerne un procédé de commande d'au moins un système de contrôle d'actionneur d'un aéronef pour agir sur une force appliquée à l'aéronef. L'aéronef présente un vecteur vitesse air et un vecteur vitesse sol. Il comporte au moins un moteur et un système de contrôle moteur pour faire varier une force de poussée générée par le ou les moteurs, le système de contrôle moteur formant un premier système de contrôle d'actionneur.

Le procédé de commande comprend la détermination d'une variation de poussée de l'aéronef pour asservir une grandeur relative à l'aéronef par rapport à une consigne, l'élaboration d'un premier signal de commande à destination du système de contrôle moteur pour obtenir ladite variation de poussée, et la transmission dudit premier signal de commande audit système de contrôle moteur.

L'invention concerne également un produit programme d'ordinateur comportant des instructions logicielles qui, lorsqu'elles sont mises en oeuvre par un ordinateur, mettent en oeuvre un tel procédé de commande.

L'invention concerne également un dispositif électronique de commande d'au moins un système de contrôle d'actionneur d'un aéronef pour agir sur une force appliquée à l'aéronef.

L'invention concerne également un aéronef, tel qu'un avion, comprenant au moins un moteur, des roues, un système de contrôle moteur pour faire varier une force de poussée générée par le ou les moteurs, le système de contrôle moteur formant un premier système de contrôle d'actionneur, un système de contrôle de freinage aérodynamique, tel qu'un système d'aérofrein ou un système de déportance, pour agir sur une force de trainée sur l'aéronef, le système de contrôle de freinage aérodynamique formant un deuxième système de contrôle d'actionneur, un système de contrôle de traction sol pour agir sur une force de traction exercée au sol par les roues, le système de contrôle de traction sol formant un troisième système de contrôle d'actionneur, un système de contrôle de freinage sol pour agir sur une force de freinage exercée au sol par les roues, le système de contrôle de freinage sol formant un quatrième système de contrôle d'actionneur, et un tel dispositif électronique de commande d'au moins l'un des systèmes de contrôle d'actionneur pour agir sur une force appliquée à l'aéronef.

L'invention s'applique au domaine de l'avionique, et plus particulièrement à celui des systèmes de conduite de vol, tels que des systèmes d'auto-poussée, de contrôle de systèmes des aérofreins et/ou de déportance, et à leurs interfaces avec l'équipage.

Les aéronefs sont généralement équipés de systèmes d'auto-poussée, également appelés auto-manettes, qui sont en charge de maintenir automatiquement une vitesse de consigne ou un niveau de poussée via le contrôle des moteurs. Ces systèmes d'auto-poussée sont généralement associés à une ou plusieurs manettes des gaz, manipulables par l'équipage sur une plage de variation correspondant à un paramètre de contrôle du moteur, et l'équipage dispose en outre généralement d'un mode automatique dans lequel les consignes de vitesse ou de régime moteur sont automatiquement asservies.

Lorsque le mode automatique des systèmes d'auto-poussée n'est pas engagé, l'équipage fixe un régime moteur via la manette des gaz correspondante, ce qui entraîne une variation de la poussée délivrée par les moteurs, sans que la vitesse soit pour autant asservie, une variation des conditions de vol et/ou de la trajectoire devant alors être compensée par l'équipage via une action corrective sur les commandes de pilotage (manche ou manette) pour conserver la vitesse de l'aéronef.

On connaît du document US 2011/0238277 A1 un procédé et un dispositif de commande du type précité. Ce document décrit un procédé et un système de gestion d'une variation d'énergie d'un aéronef muni d'au moins un système de propulsion apte à générer une force de poussée sur ledit aéronef. Le système de gestion de la variation d'énergie de l'aéronef comprend des moyens pour déterminer la variation d'énergie courante dudit aéronef, des moyens pour commander une variation d'énergie de l'aéronef, et des moyens pour déterminer, en fonction de ladite variation d'énergie commandée, une force de poussée nécessaire qui doit être générée par ledit système de propulsion pour que la variation d'énergie de l'aéronef puisse tendre vers ladite variation d'énergie commandée. Le système de gestion de variation d'énergie comprend enfin des moyens pour élaborer et appliquer un ordre de commande audit système de propulsion pour qu'il délivre ladite force de poussée nécessaire.

US 6,262,674 B1 décrit un procédé d'affichage d'informations relatives aux moteurs d'un aéronef et à la force de poussée générée par les moteurs, notamment d'un indicateur de poussée potentielle.

US 5,079,711 A décrit un système de commande de la vitesse et du chemin dans le plan vertical d'un aéronef, afin de contrôler une erreur d'énergie totale à l'aide de la poussée.

Toutefois, avec de tels systèmes d'auto-poussée ou de gestion de variation d'énergie, une évolution de la trajectoire ou des conditions de vol ne sera pas nécessairement compensée par une variation de la poussée délivrée par les moteurs, ce qui pourra entraîner une perte de vitesse qui ne sera pas nécessairement perçue par l'équipage.

Un but de l'invention est donc de proposer un procédé et un dispositif de commande d'au moins un système de contrôle d'actionneur permettant d'améliorer la sécurité du vol de l'aéronef et de diminuer la charge de travail pour l'équipage, en tenant compte de l'évolution de la trajectoire ou des conditions de vol.

A cet effet, l'invention a pour objet un procédé de commande selon la revendication 1.

Le procédé de commande permet alors, en utilisant comme grandeur asservie l'accélération selon la direction portée par le vecteur vitesse parmi le vecteur vitesse air et le vecteur vitesse sol, dite accélération sur pente, de commander le système de contrôle d'actionneur de manière asservie par rapport à ladite accélération sur pente, de sorte qu'une évolution de la trajectoire ou des conditions de vol entraînant un changement de pente de l'aéronef sera compensée par une variation de régime moteur pour tenir ladite accélération sur pente.

Suivant d'autres aspects avantageux de l'invention, le procédé de commande est selon l'une quelconque des revendications 2 à 11.

L'invention a également pour objet un produit programme d'ordinateur comportant des instructions logicielles qui, lorsqu'elles sont mises en oeuvre par un ordinateur, mettent en oeuvre le procédé de commande tel que défini ci-dessus.

L'invention a également pour objet un dispositif électronique de commande selon la revendication 13.

Suivant d'autres aspects avantageux de l'invention, le dispositif de commande est selon l'une quelconque des revendications 14 et 15.

L'invention a également pour objet un aéronef selon la revendication 16.

Ces caractéristiques et avantages de l'invention apparaîtront à la lecture de la description qui va suivre, donnée uniquement à titre d'exemple non limitatif, et faite en référence aux dessins annexés sur lesquels :

- la figure 1 représente de manière schématique les forces de poussée et de traînée appliquées à un aéronef, ainsi que son vecteur vitesse air et son vecteur vitesse sol,

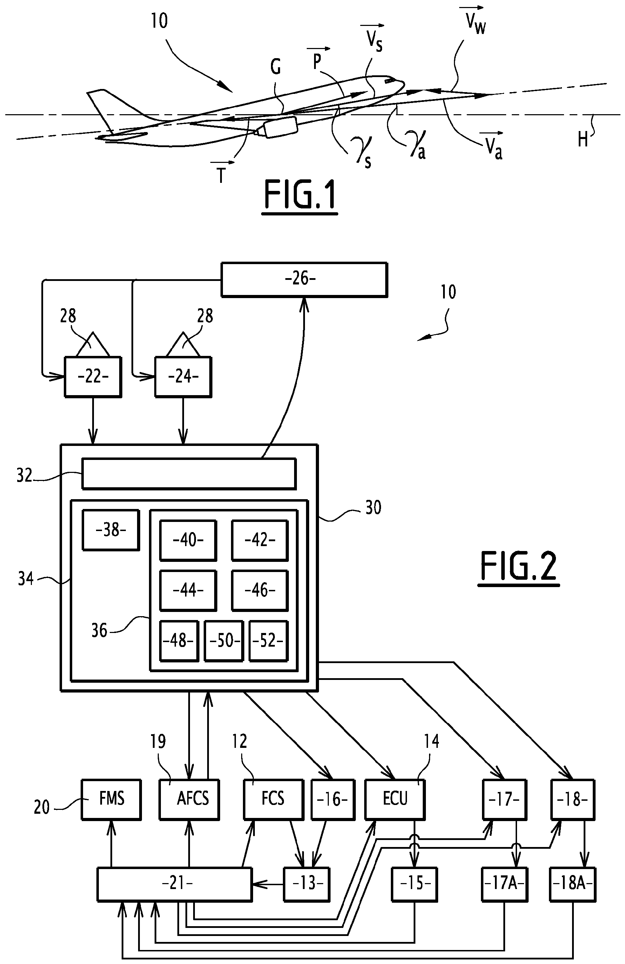

- la figure 2 est une représentation schématique de l'aéronef de la figure 1, l'aéronef comprenant plusieurs moteurs, des roues, un système de contrôle moteur pour faire varier une force de poussée générée par les moteurs et formant un premier système de contrôle d'actionneur, un système de contrôle de freinage aérodynamique pour agir sur une force de traînée sur l'aéronef et formant un deuxième système de contrôle d'actionneur, un système de contrôle de traction sol pour agir sur une force de traction exercée au sol par les roues, le système de contrôle de traction sol formant un troisième système de contrôle d'actionneur, un système de contrôle de freinage sol pour agir sur une force de freinage exercée au sol par les roues, le système de contrôle de freinage sol formant un quatrième système de contrôle d'actionneur, un système de commande de vol, un dispositif de pilotage automatique, des manches et des manettes formant des organes primaires de commande aptes à être manipulés pour le pilotage de l'aéronef, et un dispositif électronique de commande d'au moins l'un des systèmes de contrôle d'actionneur pour agir sur la force de poussée, en complément facultatif sur la force de traînée, et en complément facultatif encore lorsque l'aéronef est au sol, sur la force de traction des roues au sol et/ou sur la force de freinage des roues au sol,

- la figure 3 est une représentation schématique de positions de la manette pour sélectionner différentes valeurs d'une consigne d'accélération selon une direction portée par un vecteur vitesse parmi le vecteur vitesse air et le vecteur vitesse sol, dite consigne d'accélération sur pente,
- la figure 4 est une représentation schématique d'informations affichées sur un écran du dispositif de commande de la figure 2, les informations affichées comprenant notamment un symbole représentant la consigne d'accélération sur pente,
- la figure 5 est une vue d'autres symboles possibles pour représenter la consigne d'accélération sur pente, et
- la figure 6 est un organigramme d'un procédé, selon l'invention, de commande d'au moins l'un des systèmes de contrôle d'actionneur de l'aéronef.

Sur la figure 1, un aéronef 10, tel qu'un avion, est soumis à, une force de poussée P et à une force de traînée T, chacune étant appliquée au centre de gravité G de l'aéronef. L'aéronef 10 se déplace par rapport au sol selon un vecteur vitesse sol $V_s$ qui forme avec l'horizontale H un angle $\gamma_s$ appelé pente sol de l'aéronef, et se déplace par rapport à l'air selon un vecteur vitesse air $V_a$ qui forme avec l'horizontale H un angle $\gamma_a$ appelé pente air de l'aéronef. La différence entre le vecteur vitesse sol $V_s$ et le vecteur vitesse air $V_a$ correspond au vecteur vitesse vent $V_w$ qui représente le déplacement de l'air par rapport au sol.

Sur la figure 1, les vecteurs de poussée, de traînée, vitesse sol, vitesse air et vitesse vent sont repérés par des notations vectorielles avec une flèche. Par convention dans la présente demande et par souci de simplification des notations, les vecteurs précités sont indiqués par des notations avec des lettres majuscules et sans flèche.

Sur la figure 2, l'aéronef 10 comprend un système de commande de vol 12, également noté FCS (de l'anglais *Flight Control System*) ou FBW (de l'anglais *Fly By Wire*), pour agir sur un ensemble de gouvernes et d'actionneurs 13 de l'aéronef, les gouvernes étant par exemple des ailerons, la gouverne de profondeur ou la gouverne de direction.

L'aéronef 10 comprend un système de contrôle moteur 14, également noté ECU (de l'anglais *Engine Control Unit*) pour faire varier l'énergie délivrée par un moteur 15 de l'aéronef, tel qu'un réacteur, un turbopropulseur ou encore une turbine. Le système de contrôle moteur 14 forme un premier système de contrôle d'actionneur de l'aéronef. Lorsque l'aéronef 10 comporte plusieurs moteurs 15, le système de contrôle moteur 14 est adapté pour faire varier l'énergie délivrée par l'ensemble des moteurs 15.

L'aéronef 10 comprend également un système de contrôle de freinage aérodynamique 16, tel qu'un système d'aérofrein ou un système de déportance, pour agir sur les gouvernes de l'ensemble 13 et agir ainsi sur la force de traînée T, le système de contrôle de freinage aérodynamique 16 formant un deuxième système de contrôle d'actionneur.

L'aéronef 10 comprend un système de contrôle de traction sol 17 pour faire varier l'énergie délivrée par au moins un moteur additionnel 17A, chaque moteur additionnel 17A étant adapté pour entraîner des roues d'un train d'atterrissage, non représenté. Le système de contrôle de traction sol 17 est alors adapté pour agir sur une force de traction R exercée au sol par les roues. Le système de contrôle de traction sol 17 forme alors un troisième système de contrôle d'actionneur.

L'aéronef 10 comprend également un système de contrôle de freinage sol 18 pour contrôler un système de frein 18A et pour agir ainsi sur une force de freinage B exercée au sol par les roues. Le système de contrôle de freinage sol 18 forme alors un quatrième système de contrôle d'actionneur

L'aéronef 10 comprend au moins un système de guidage, tel qu'un dispositif de pilotage automatique 19, également noté AFCS (de l'anglais *Auto-Flight Control System*), également appelé pilote automatique et noté PA ou AP (de l'anglais *Automatic Pilot*), ou encore tel qu'un système 20 de gestion du vol de l'aéronef, également noté FMS (de l'anglais *Flight Management System*). En complément, le système de guidage est un dispositif d'auto-poussée, non représenté, également appelé auto-manette.

L'aéronef 10 comprend un ensemble de capteurs 21 adaptés pour mesurer différentes grandeurs associées à l'aéronef, notamment des grandeurs associées à l'ensemble de gouvernes et d'actionneurs 13 et au déplacement de l'aéronef 10, et à transmettre les valeurs mesurées desdites grandeurs au système de commande de vol 12, au système de contrôle moteur 14, au système de contrôle de freinage aérodynamique 16, au système de contrôle de traction sol 17, au système de contrôle de freinage sol 18, au dispositif de pilotage automatique 19 et/ou au système de gestion du vol 20.

L'aéronef 10 comprend un ou plusieurs manches ou mini-manches 22 et une ou plusieurs manettes ou mini-manettes 24, formant chacun un organe primaire de commande apte à être manipulé par l'équipage 26 de l'aéronef pour le pilotage de l'aéronef. La mini-manette 24 désigne une manette avec un retour d'effort vers une position d'équilibre. Par la suite, le terme « manche » désignera indifféremment un manche ou un mini-manche et le terme « manette » désignera indifféremment une manette ou mini-manette.

En complément, l'aéronef 10 comprend un organe annexe de commande 28 permettant d'incrémenter ou de décrémenter une consigne, ou encore de désigner directement la valeur de cette consigne.

L'aéronef 10 comprend un dispositif électronique 30 de commande d'au moins l'un des systèmes de contrôle d'actionneur 14, 16, 17, 18 pour agir sur une force appliquée à l'aéronef 10, la force sur laquelle le dispositif de commande 30 est adapté pour agir étant notamment la force de poussée P, voire en complément la force de traînée T, voire en complément la force de traction R et/ou la force de freinage B exercée via l'intermédiaires des roues lorsque l'aéronef est au sol.

Le système de commande de vol 12 est connu en soi, et permet, via son action sur l'ensemble de gouvernes et d'actionneurs 13, de provoquer un changement d'attitude de l'aéronef 10.

Le système de contrôle moteur 14 forme, par convention dans la présente demande, le premier système de contrôle d'actionneur, et est connu en soi. Il permet de provoquer une variation de la poussée des réacteurs 15 de l'aéronef.

Le système de contrôle de freinage aérodynamique 16 forme, par convention dans la présente demande, le deuxième système de contrôle d'actionneur, et permet de provoquer une variation de la traînée T appliquée à l'aéronef. Le système de contrôle de freinage aérodynamique 16 est adapté pour engendrer ladite variation de la force de traînée T via une action sur les gouvernes de l'ensemble 13.

Dans l'exemple de réalisation de la figure 2, le système de contrôle de freinage aérodynamique 16 est un système distinct des autres systèmes 12, 14, 17, 18, 19 et 20 de l'aéronef, notamment du système de commandes de vol 12. En variante, non représentée, le système de contrôle de freinage aérodynamique 16 est intégré au système de commandes de vol 12.

Le système de contrôle de traction sol 17 et respectivement le système de contrôle de freinage sol 18 sont connus en soi, et permettent d'agir via le ou les moteurs additionnels 17A sur la force de traction R, respectivement via le système de frein 18A, voire via le moteur additionnel 17A, sur la force de freinage B. Le système de contrôle de traction sol 17 et le système de contrôle de freinage sol 18 sont alors adaptés pour agir sur la force de traction R ou de freinage B exercée par l'intermédiaire des roues dès lors que l'aéronef est au sol.

Le dispositif de pilotage automatique 19 et/ou le dispositif d'auto-poussée sont connus en soi, et permettent d'agir sur la trajectoire de l'aéronef.

Le système de gestion du vol 20 est connu en soi, et est adapté pour gérer un plan de vol de l'aéronef 10, depuis son décollage jusqu'à son atterrissage.

Les capteurs 21 sont notamment adaptés pour fournir des informations relatives à la position des éléments de l'ensemble de gouvernes et d'actionneurs 13, par exemple la position d'une gouverne, et/ou relatives à l'état du ou des moteurs 15, et/ou relatives à des configurations d'hypersustentation, et/ou relatives à l'état déployé ou non des trains d'atterrissage.

Les capteurs 21 sont en outre adaptés pour fournir des informations relatives au positionnement de l'aéronef 10, telles que des attitudes, des accélérations, une vitesse sol, une vitesse air, une vitesse des roues, une route, une altitude, une latitude, une longitude, et/ou relatives à l'environnement de l'aéronef 10, de préférence relatives à l'atmosphère dans laquelle évolue l'aéronef 10, par exemple une pression ou encore une température.

Chaque manche 22 est adapté pour permettre à un utilisateur de contrôler les attitudes de l'aéronef 10. De façon classique, chaque manche 22 est un levier de commande adapté pour être actionné selon des mouvements transversaux, des mouvements longitudinaux ou toute combinaison de mouvements transversaux et longitudinaux. Autrement dit, chaque manche 22 est mobile selon au moins deux directions de déplacement distinctes, les directions de déplacement étant en outre perpendiculaires l'une de l'autre dans l'exemple de réalisation décrit.

Plus précisément, chaque manche 22 est adapté pour permettre à un utilisateur de contrôler l'angle de roulis par des mouvements transversaux du manche, et l'angle de tangage ou le facteur de charge par des mouvements longitudinaux du manche.

Chaque manette 24 est adaptée pour permettre à un utilisateur de sélectionner une valeur d'une consigne d'accélération Acc_cons selon la direction portée par le vecteur vitesse parmi le vecteur vitesse air et le vecteur vitesse sol, dite consigne d'accélération sur pente Acc_cons. Chaque manette 24 est, par exemple, un levier de commande adapté pour être actionné selon des mouvements longitudinaux. Autrement dit, chaque manette 24 est mobile selon une direction de déplacement, à savoir la direction longitudinale.

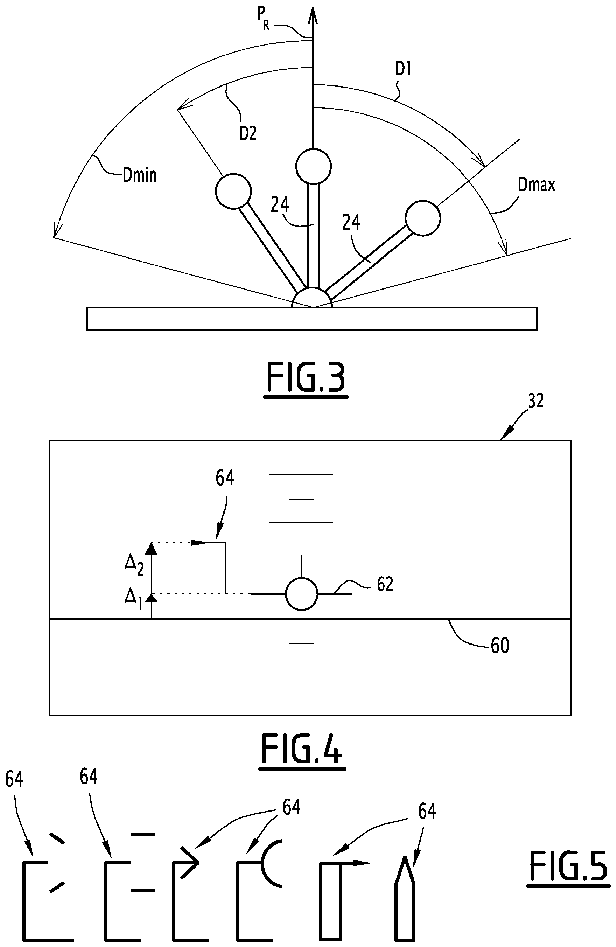

Chaque manche 22 et chaque manette 24 comporte chacun une position de repos pour chaque direction de déplacement, correspondant de préférence à la position médiane entre les valeurs extrêmes d'un débattement D de chaque manche 22 ou de chaque manette 24 suivant la direction de déplacement correspondante. Sur la figure 3, la position de repos est la position correspondant à l'axe $P_R$.

En complément, chaque manche 22 et chaque manette 24 sont chacun un levier de commande à retour d'effort mécanique contrôlable, c'est-à-dire pilotable, et une loi de retour d'effort mécanique définit l'effort mécanique fourni par chaque levier 22, 24 en fonction du débattement D de chaque levier 22, 24 par rapport à sa position de repos. Selon ce complément, chaque manche 22 et chaque manette 24 sont alors généralement plus spécifiquement appelés mini-manche et mini-manette.

En complément, la loi de retour d'effort mécanique est fonction d'autres paramètres, tels que l'état des actionneurs ou des systèmes de guidage par exemple.

En complément, chaque levier de commande formant chaque manette 24 et/ou chaque manche 22 comporte au moins une position prédéterminée de référence, la ou les positions de référence correspondant par exemple à des crans de position, non représentés.

En complément, l'organe annexe de commande 28 est fixé à chaque manette 24 et/ou optionnellement à chaque manche 22. Il est mobile selon au moins une direction, afin d'incrémenter ou de décrémenter au moins une consigne correspondante, préférentiellement une consigne de vitesse air (CAS, TAS, MACH) ou de vitesse sol au roulage. Lorsque l'organe annexe de commande 28 est mobile selon deux directions distinctes, il est adapté pour incrémenter ou décrémenter deux consignes distinctes.

L'organe annexe de commande 28 est par exemple de forme conique lorsqu'il est mobile selon deux directions distinctes, ou en forme d'une molette lorsqu'il est mobile selon une unique direction. L'organe annexe de commande 28 associé à chaque manche 22 est de préférence de forme conique, et est également appelé sapin, et celui associé à chaque manette 24 est de préférence en forme de molette.

Le dispositif de commande 30 comprend un écran d'affichage 32 et une unité de traitement d'informations 34 formée par exemple d'une mémoire 36 et d'un processeur 38 associé à la mémoire 36.

Dans l'exemple de réalisation de la figure 2, le dispositif de commande 30 est distinct du système de commande de vol 12, du système de contrôle moteur 14, du système de contrôle de freinage aérodynamique 16, du dispositif de pilotage automatique 19 et du système de gestion du vol 20.

En variante, non représentée, le dispositif de commande 30 est intégré à l'un quelconque des éléments choisis parmi les éléments suivants : le système de commande de vol 12, le système de contrôle moteur 14, le système de contrôle de freinage aérodynamique 16, le système de contrôle de traction sol 17, le système de contrôle de freinage sol 18, le dispositif de pilotage automatique 19 et le système de gestion du vol 20. L'unité de traitement d'informations 34 correspond alors à l'unité de traitement d'informations, non représentée, dudit élément. Selon cette variante, le dispositif de commande 30 est de préférence intégré au système de commande de vol 12.

La mémoire 36 est apte à stocker un logiciel 40 de mesure d'une grandeur mécanique relative à la manette 24, telle que le débattement D de la manette 24 ou un effort mécanique F appliqué par l'équipage 26 contre la manette 24, formant levier de commande, et de calcul d'une valeur de la consigne d'accélération sur pente Acc_cons en fonction de la grandeur mécanique D, F, et optionnellement de la valeur précédente de la consigne d'accélération. La mémoire 36 est également apte à stocker un logiciel 42 d'acquisition d'une valeur de la consigne d'accélération sur pente Acc_cons calculée par un système avionique externe au dispositif de commande 30, un logiciel 44 d'affichage d'informations à l'écran 32 du dispositif de commande, notamment d'un symbole représentant la valeur de la consigne d'accélération sur pente Acc_cons.

La mémoire 36 est également apte à stocker un logiciel 46 de détermination d'une variation de poussée $\Delta P$, en complément facultatif d'une variation de traînée $\Delta T$, et en complément facultatif encore d'une variation d'accélération de l'aéronef au sol, pour asservir une grandeur relative à l'aéronef par rapport à une consigne donnée.

Selon l'invention, la grandeur asservie est une accélération de l'aéronef selon la direction portée par un vecteur vitesse parmi le vecteur vitesse air $V_a$ et le vecteur vitesse sol $V_s$, dite accélération sur pente, et la consigne est la consigne d'accélération sur pente Acc_cons.

L'homme du métier comprendra que, de manière générale, chaque accélération définie dans la présente demande, notamment l'accélération sur pente ou l'accélération de l'aéronef au sol, également appelée accélération sol, est une accélération algébrique et qu'une valeur négative de chaque accélération correspond à une décélération.

La grandeur asservie est de préférence une accélération de l'aéronef selon la direction portée par le vecteur vitesse air $V_a$ lorsque l'aéronef est en vol et le vecteur vitesse sol $V_s$ lorsque l'aéronef est au sol.

La mémoire 36 est également apte à stocker un premier logiciel 48 d'élaboration d'un premier signal de commande à destination du système de contrôle moteur 14 pour obtenir ladite variation de poussée $\Delta P$ et de transmission dudit premier signal de commande audit système contrôle moteur 14.

En complément facultatif, la mémoire 36 est également apte à stocker un deuxième logiciel 50 d'élaboration d'un deuxième signal de commande à destination du système de contrôle de freinage aérodynamique 16 pour obtenir ladite variation de traînée $\Delta T$ et de transmission dudit deuxième signal de commande audit système de contrôle de freinage aérodynamique 16.

En complément facultatif, la mémoire 36 est également apte à stocker un troisième logiciel 52 d'élaboration d'au moins un signal de commande sol parmi un troisième signal de commande à destination du système de contrôle de traction sol 17 et un quatrième signal de commande à destination du système de contrôle de freinage sol 18, pour obtenir ladite variation d'accélération sol, et la transmission de chaque signal de commande sol au système de contrôle 17, 18 correspondant.

Le processeur 38 est propre à charger et à exécuter chacun des logiciels 40, 42, 44, 46, 48, 50 et 52.

Le logiciel de mesure et de calcul 40, respectivement le logiciel d'acquisition 42, respectivement le logiciel d'affichage 44, respectivement le logiciel de détermination 46, respectivement le premier logiciel d'élaboration et de transmission 48, respectivement le deuxième logiciel d'élaboration et de transmission 50, et respectivement le troisième logiciel d'élaboration et de transmission 52 forment des moyens de mesure d'une grandeur mécanique relative à la manette et de calcul d'une valeur de la consigne d'accélération sur pente en fonction de la grandeur mécanique mesurée, respectivement des moyens d'acquisition d'une valeur de la consigne d'accélération sur pente calculée par un système avionique externe au dispositif de commande, respectivement des moyens d'affichage d'informations à l'écran, respectivement des moyens de détermination d'une variation de poussée, et en complément facultatif d'une variation de traînée, et en complément facultatif encore d'une variation d'accélération de l'aéronef au sol, de l'aéronef pour asservir l'accélération sur pente par rapport à la consigne d'accélération sur pente, respectivement des premiers moyens d'élaboration et de transmission du premier signal de commande, respectivement des deuxièmes moyens d'élaboration et de transmission du deuxième signal de commande, et respectivement des troisièmes moyens d'élaboration et de transmission d'au moins un signal de commande sol.

En variante, les moyens de mesure et de calcul 40, les moyens d'acquisition 42, les moyens d'affichage 44, les moyens de détermination 46, les premiers moyens d'élaboration et de transmission 48, les deuxièmes moyens d'élaboration et de transmission 50 et les troisièmes moyens d'élaboration et de transmission 52 sont réalisés sous forme de composants logiques programmables, ou encore sous forme de circuits intégrés dédiés.

Le logiciel de mesure et de calcul 40 est adapté pour mesurer la valeur du débattement D de la manette 24, comprise entre une valeur minimale Dmin et une valeur maximale Dmax, comme représenté sur la figure 3. Par convention, dans la présente demande, la valeur minimale Dmin est négative, la valeur maximale Dmax est positive, et la position de repos de la manette 24, matérialisée par l'axe $P_R$, correspond à une valeur nulle du débattement D. Dans l'exemple de réalisation de la figure 3, la valeur D1 du débattement D est alors une valeur positive, et la valeur D2 du débattement D est une valeur négative.

En variante, non représentée, le logiciel de mesure et de calcul 40 est adapté pour mesurer la valeur de l'effort mécanique F appliqué contre la manette 24, comprise entre une valeur minimale d'effort Fmin et une valeur maximale d'effort Fmax.

Le logiciel de mesure et de calcul 40 est ensuite adapté pour convertir la valeur mesurée de la grandeur mécanique D, F en un incrément de commande d'accélération sur pente, la position de repos de la manette 24 correspondant à un incrément nul de commande. L'incrément de commande est alors multiplié, par le logiciel de mesure et de calcul 40, par un coefficient K dépendant d'un pas de calcul de l'algorithme avant d'être ajouté à la valeur précédente de la consigne. Ceci revient alors à effectuer une intégration temporelle de l'incrément de commande pour obtenir une consigne d'accélération sur pente. Autrement dit, le maintien de la manette 24 dans une position autre que la position de repos ou l'application d'un effort F non nul entraînera alors une évolution constante de la consigne d'accélération sur pente.

De façon optionnelle, le coefficient K sera adapté en prenant en compte les critères suivants : l'ergonomie du manche (débattement, hauteur, etc), le type d'aéronef, ainsi que sa motorisation et les performances de la motorisation (nombre de moteurs en fonctionnement, etc), et la phase de vol (décollage, croisière, approche, au sol) déterminée entre autres par la mesure de paramètres avion (altitude, vitesse, configuration de l'aéronef).

De façon optionnelle la consigne d'accélération sur pente est limitée entre des valeurs minimale et maximale d'accélération, calculées par ailleurs en fonction de la configuration de l'aéronef et des conditions de vol, pour obtenir une consigne limitée d'accélération sur pente.

De façon optionnelle, le logiciel de mesure et de calcul 40 est en outre adapté pour appliquer une fonction non-linéaire à la consigne limitée d'accélération sur pente, ceci afin de faciliter la sélection par l'équipage 26 de certaines accélérations caractéristiques, telle qu'une accélération nulle, une accélération maximale, une accélération minimale avec les aérofreins ou systèmes de déportance rentrés.

La consigne d'accélération sur pente Acc_cons ainsi calculée est alors envoyée, d'une part, au logiciel d'affichage 44, et d'autre part au logiciel 46 de détermination de la variation de poussée P, voire en complément de la variation de traînée T, voire en complément d'une variation d'accélération de l'aéronef au sol.

Dans cet exemple de réalisation, la grandeur mécanique D, F relative à la manette 24 correspond alors un incrément/décrément de la consigne d'accélération sur pente Acc_cons.

En variante, la grandeur mécanique D, F relative à la manette 24 correspond à un niveau de la consigne d'accélération sur pente Acc_cons. Selon cette variante, le logiciel de mesure et de calcul 40 est de manière analogue adapté pour mesurer la valeur de la grandeur mécanique D, F relative à la manette 24, comprise entre la valeur minimale Dmin et la valeur maximale Dmax, respectivement la valeur minimale d'effort Fmin et la valeur maximale d'effort Fmax. Le logiciel de mesure et de calcul 40 est ensuite adapté pour convertir la valeur mesurée de la grandeur mécanique D, F en une commande, de manière optionnelle par application d'une fonction non-linéaire afin de permettre une sélection précise de faibles commandes et également de commandes extrêmes correspondant aux grandeurs extrêmes de la manette 24.

Selon cette variante, le logiciel de mesure et de calcul 40 est alors adapté pour convertir la commande ainsi déterminée en la consigne d'accélération sur pente Acc_cons, en prenant de façon optionnelle en compte les critères précités relatifs à l'ergonomie du manche, au type d'aéronef et à la phase de vol.

Selon cette variante et de façon optionnelle, la consigne d'accélération sur pente est également limitée entre les valeurs minimale et maximale d'accélération, préalablement calculées en fonction de la configuration de l'aéronef et des conditions de vol.

En complément ou en variante, lorsque le levier de commande formant la manette 24 est positionné selon une position prédéterminée correspondante de référence, la valeur de la consigne d'accélération Acc_cons est fixée égale à un réglage prédéfini associé à ladite position prédéterminée de référence. La valeur maximale de la consigne d'accélération Acc_cons correspond par exemple à une position prédéterminée de référence, tel qu'un cran mécanique de position.

La consigne d'accélération sur pente Acc_cons ainsi calculée est, de manière analogue à l'exemple de réalisation décrit précédemment, envoyée au logiciel d'affichage 44, d'une part, et au logiciel de détermination 46, d'autre part.

Le logiciel d'acquisition 42 est adapté pour acquérir une valeur de la consigne d'accélération sur pente Acc_cons, lorsque celle-ci est, selon un autre mode de fonctionnement, calculée par un système avionique externe au dispositif de commande 30. Selon cet autre mode de fonctionnement, la consigne d'accélération sur pente Acc_cons prise en compte par le logiciel de détermination 46 pour déterminer la variation de poussée ΔP, voire la variation de traînée ΔT, voire la variation d'accélération de l'aéronef au sol, est alors la valeur de consigne issue du logiciel d'acquisition 42, en lieu et place de celle issue du logiciel de mesure et de calcul 40.

Selon cet autre mode de fonctionnement, lorsque l'aéronef 10 est en vol, le système avionique apte à fournir la consigne d'accélération sur pente Acc_cons est, par exemple, le dispositif de pilotage automatique 19, également noté AFCS, et la consigne d'accélération sur pente Acc_cons vérifie alors, par exemple, l'équation suivante :

$$Acc\_cons = K_1 \times \left(V_{cons} - V\right) \qquad (1)$$

où V représente une mesure de la vitesse de l'aéronef 10 à asservir par rapport à une consigne de vitesse $V_{cons}$, et

K1 est un premier gain, de valeur paramétrable en fonction de paramètres avioniques, tels que la vitesse air de l'aéronef (CAS - de l'anglais *Calibrated Airspeed,* MACH, TAS - de l'anglais *True Airspeed*), l'altitude de l'aéronef, le type d'aéronef, l'état des actionneurs (par exemple la position des gouvernes ou le régime moteur) ou la configuration de l'aéronef.

Selon cet autre mode de fonctionnement, lorsque l'aéronef 10 est au sol, le système avionique apte à fournir la consigne d'accélération sur pente Acc_cons est, par exemple, un système de navigation aéroportuaire, également appelé OANS (de l'anglais *Onboard Airport Navigation System*), ou encore le dispositif de pilotage automatique 19, également noté AFCS.

Le logiciel d'affichage 44 est adapté pour afficher des informations à l'écran d'affichage 32, telles qu'une ligne d'horizon artificiel 60, un symbole vecteur vitesse 62 et un symbole consigne d'accélération sur pente 64, comme représenté sur la figure 4. Le logiciel d'affichage 44 est plus généralement adapté pour afficher un symbole de référence et le symbole consigne d'accélération sur pente 64, et l'écart en ordonnée entre le symbole de référence et le symbole consigne d'accélération sur pente 64 représente alors la consigne d'accélération sur pente Acc_cons.

Dans l'exemple de la figure 4, le symbole de référence est le symbole vecteur vitesse 62 qui indique la direction du vecteur vitesse sol $V_s$ de l'aéronef 10, l'écart algébrique en ordonnée $\Delta_1$ entre la ligne d'horizon 60 et le symbole vecteur vitesse 62 représentant la pente sol $\gamma_s$ de l'aéronef. L'écart algébrique en ordonnée $\Delta_2$ entre le symbole vecteur vitesse 62 formant le symbole de référence et le symbole consigne d'accélération sur pente 64 représente la consigne d'accélération sur pente Acc_cons.

En variante, non représentée, le symbole vecteur vitesse n'est pas affiché, et le symbole de référence est formé par la ligne d'horizon artificiel 60. Selon cette variante, l'écart en ordonnée entre la ligne d'horizon artificiel 60 et le symbole consigne d'accélération sur pente 64 représente alors la consigne d'accélération sur pente Acc_cons.

A titre d'exemple, l'écart en ordonnée $\Delta_2$ est affiché en degrés, ce qui permet alors de visualiser la consigne d'accélération sur pente Acc_cons en utilisant l'échelle de pente ou d'assiette graduée en degrés et connue de l'homme du métier. L'écart en ordonnée $\Delta_2$ vérifie alors l'équation suivante :

$$\Delta_2 = \frac{180}{\pi} \times \frac{Acc\_cons}{g} \qquad (2)$$

où 180/π représente le facteur de conversion de radians en degrés ;
Acc_cons est la consigne d'accélération sur pente en m/s$^2$ ; et
g est l'accélération de la pesanteur en m/s$^2$.

En variante encore, non représentée, le symbole vecteur vitesse n'est pas affiché, et le symbole de référence est formé par un symbole de consigne de vecteur vitesse. L'écart en ordonnée entre le symbole de consigne de vecteur vitesse et le symbole consigne d'accélération sur pente 64 représente alors la consigne d'accélération sur pente Acc_cons.

En variante encore, non représentée, le symbole de consigne de vecteur vitesse n'est pas affiché, et le symbole de référence est formé par une ligne d'horizon. L'écart en ordonnée entre la ligne d'horizon et le symbole consigne d'accélération sur pente 64 représente alors la consigne d'accélération sur pente Acc_cons.

D'autres symboles 64, par exemple ceux visibles sur la figure 5, sont bien entendu possibles pour représenter la valeur de la consigne d'accélération sur pente Acc_cons.

Le logiciel de détermination 46 est adapté pour déterminer la variation de poussée ΔP afin d'asservir une valeur estimée de l'accélération sur pente Acc_est par rapport à la valeur de la consigne d'accélération sur pente Acc_cons.

En complément facultatif, le logiciel de détermination 46 est adapté pour déterminer la variation de traînée ΔT afin d'asservir la valeur estimée de l'accélération sur pente Acc_est par rapport à la consigne d'accélération sur pente Acc_cons.

En complément facultatif, le logiciel de détermination 46 est adapté pour déterminer la variation d'accélération de l'aéronef au sol afin d'asservir la valeur estimée de l'accélération sur pente Acc_est par rapport à la consigne d'accélération sur pente Acc_cons. L'homme du métier notera que lorsque l'aéronef 10 est au sol, le vecteur vitesse sol $V_s$ et le vecteur vitesse air $V_a$ sont dirigés suivant la même direction dans le plan vertical, la pente sol $\gamma_s$ et la pente air $\gamma_a$ étant identiques, et la valeur estimée de l'accélération sur pente Acc_est est une valeur estimée d'accélération longitudinale de l'aéronef, la consigne d'accélération sur pente Acc_cons étant alors une consigne d'accélération longitudinale.

La valeur estimée de l'accélération sur pente Acc_est dépend d'au moins une valeur parmi une dérivée temporelle estimée d'une vitesse air mesurée TAS et une accélération estimée FPA_ACC selon la direction portée par un vecteur vitesse choisi parmi le vecteur vitesse sol $V_s$ et le vecteur vitesse air $V_a$.

La valeur estimée de l'accélération sur pente Acc_est sera préférentiellement calculée en utilisant :

- une estimée d'une vitesse air TAS en vol ou une estimée de la vitesse sol (basée sur la vitesse de rotation des roues par exemple) au sol et,

- une accélération estimée FPA_ACC selon la direction portée par un vecteur vitesse choisi parmi le vecteur vitesse sol $V_s$ et le vecteur vitesse air $V_a$.

La valeur estimée de l'accélération sur pente Acc_est vérifie, par exemple, l'équation suivante :

$$Acc\_est = H(p)\left[FPA\_ACC + \frac{TAS}{T}\right] \quad (3)$$

où H(p) représente une fonction de transfert avec p la variable de Laplace
FPA_ACC représente l'accélération estimée de l'aéronef 10 selon la direction portée par un vecteur vitesse choisi parmi le vecteur vitesse sol $V_s$ et le vecteur vitesse air $V_a$,
TAS représente la vitesse air mesurée de l'aéronef 10, et
T représente un gain.

La fonction de transfert H vérifie par exemple l'équation :

$$H(p) = \frac{T \times p}{1 + T \times p} \quad (4)$$

où T représente le gain précité.

Selon le complément facultatif précité et lorsque l'aéronef 10 est au sol, l'estimation de l'accélération Acc_est est modifiée pour utiliser la ou les vitesses des roues.

En vue de la détermination des variations de poussée ΔP et de traînée ΔT, le logiciel de détermination 46 est adapté pour calculer un écart de force ΔF selon l'équation suivante :

$$\frac{dF}{dt} = \frac{d(P-T)}{dt} = \frac{m \cdot g^2}{V} \times \left[K2 \times \left(Acc\_cons - \frac{1}{g} \cdot \frac{dV}{dt}\right) + \cos(\gamma_s) \times \frac{\left(V \cdot \frac{d^2 Z}{dt^2} - \frac{dZ}{dt} \cdot \frac{dV}{dt}\right)}{V \cdot g}\right] \quad (5)$$

où P et T représentent respectivement les composantes utiles de la poussée et de la traînée appliquées à l'aéronef 10, c'est-à-dire la projection dans le plan vertical et suivant la direction du vecteur vitesse air desdites forces,
m, V représentent respectivement la masse et la vitesse air de l'aéronef 10,
$\gamma_s$ représente la pente sol de l'aéronef,
g représente l'accélération de la pesanteur,
K2 représente un gain sans dimension, de valeur paramétrable de façon optionnelle en fonction de mesures de grandeur relatives à l'aéronef, telles que la vitesse V et l'altitude, la configuration de l'aéronef ou le type d'aéronef,
Acc_cons représente la consigne d'accélération sur pente, et

le terme $\cos(\gamma_s) \times \dfrac{\left(V \cdot \dfrac{d^2 Z}{dt^2} - \dfrac{dZ}{dt} \cdot \dfrac{dV}{dt}\right)}{V \cdot g}$ correspond à un terme de découplage, susceptible d'être négligé.

On prend comme convention que la poussée est positive lorsqu'elle est dirigée vers l'avant de l'aéronef et que la trainée est positive lorsqu'elle est dirigée vers l'arrière de l'aéronef. Autrement dit, les deux grandeurs sont positives dans les conditions normales d'un vol d'avancement.

L'équation (5) est obtenue à partir de l'équation de propulsion suivante, issue de la mécanique classique du vol en négligeant les variations de la vitesse du vent :

$$m \cdot \frac{dV}{dt} = P - m \cdot g \cdot \sin(\gamma_s) - T \qquad (6)$$

où P, T, m, V et $\gamma_s$ représentent respectivement la poussée, la traînée, la masse, la vitesse sol et la pente sol de l'aéronef 10, g représentant l'accélération de la pesanteur.

Les variations $\Delta P$ et $\Delta T$ sont calculées de telle sorte que $\Delta P - \Delta T = \Delta F$ avec pour objectif de minimiser l'utilisation combinée d'une poussée moteur non minimale et d'un freinage aérodynamique non minimal.

Par exemple, si $\Delta F$ est positif et tant que le système de contrôle de freinage aérodynamique 16 est apte à diminuer la trainée T, alors $\Delta F$ est transmis au système de contrôle de freinage aérodynamique 16. Ensuite, $\Delta F$ est transmis au système de contrôle moteur 14.

Inversement, si $\Delta F$ est négatif et tant que le système de contrôle moteur 14 est apte à diminuer la poussée P, alors $\Delta F$ est transmis au système de contrôle moteur 14. Ensuite, $\Delta F$ est transmis au système de contrôle de freinage aérodynamique 16.

Dans l'équation (5) précédente, le terme dV/dt sera de préférence considéré égal à la valeur estimée de l'accélération sur pente Acc_est, et alors calculé à l'aide de l'équation (3) précédente.

Autrement dit, la valeur estimée de l'accélération sur pente Acc_est et la valeur de la consigne d'accélération sur pente Acc_cons permettent de calculer l'écart de force $\Delta F$ selon l'équation (5), cet écart de force $\Delta F$ permettant de calculer la variation de poussée $\Delta P$, et en complément la variation de traînée $\Delta T$.

Le calcul de la variation d'accélération sol est effectué lorsque l'aéronef 10 est au sol, et ce calcul est fonction de l'accélération estimée Acc_est et de l'accélération sur pente consigne Acc_cons.

En complément facultatif la consigne d'accélération sur pente Acc_cons est alors acquise, via le logiciel d'acquisition 42, depuis le système de navigation aéroportuaire OANS. Le système de navigation aéroportuaire OANS forme alors un système avionique externe au dispositif de commande 30 et apte à fournir la consigne d'accélération sur pente Acc_cons.

A titre d'exemple, si la consigne d'accélération sur pente Acc_cons est supérieure à la valeur estimée de l'accélération sur pente Acc_est, alors la variation d'accélération de l'aéronef au sol calculée sera positive. Inversement, si la consigne d'accélération sur pente Acc_cons est inférieure à la valeur estimée de l'accélération sur pente Acc_est, la variation d'accélération sol sera négative. Autrement dit, la variation d'accélération sol est calculée pour asservir la valeur estimée de l'accélération sur pente Acc_est par rapport à la consigne d'accélération sur pente Acc_cons.

En complément facultatif, le calcul de la variation d'accélération sol est fonction en outre de la phase au sol considérée parmi la phase de roulage, la phase d'atterrissage et la phase de décollage.

A titre d'exemple complémentaire, l'amplitude de la variation d'accélération sol est fonction de la phase au sol considérée. Par exemple, l'amplitude sera plus limitée pendant la phase de roulage que lors de la décélération suivant immédiatement le toucher des roues pendant la phase d'atterrissage.

Selon ce complément facultatif, en phase de roulage, le calcul de la variation d'accélération sol est analogue au calcul de la variation de la poussée $\Delta P$ et de la variation de trainée $\Delta T$, à savoir les signaux de commande sont calculés de manière à asservir la consigne d'accélération sur pente Acc_cons en minimisant l'utilisation combinée de la force de freinage B et de la force de traction R. Autrement dit, un signal de commande est transmis au système de contrôle de freinage sol 18 seulement lorsque la force de traction R ne peut plus diminuer, et inversement un signal de commande est transmis au système de contrôle de traction sol 17 seulement lorsque la force de freinage B ne peut plus diminuer.

Le premier logiciel d'élaboration et de transmission 48 est alors adapté pour calculer le premier signal de commande à destination du système de contrôle moteur 14, de façon classique à partir de la variation de poussée $\Delta P$ calculée. Le premier signal de commande correspondra classiquement à un paramètre moteur, tel qu'un régime moteur pour un turboréacteur, ou un pas d'une pale pour un turbopropulseur ou encore un débit de carburant, un couple, ou un pas collectif pour une turbine.

De manière analogue, le deuxième logiciel d'élaboration et de transmission 50 est adapté pour calculer le deuxième signal de commande à destination du système de contrôle de freinage aérodynamique 16, de façon classique à partir de la variation de traînée $\Delta T$ calculée. Le deuxième signal de commande correspondra classiquement à une consigne de vitesse de déplacement des gouvernes ou une consigne de position des gouvernes.

De manière analogue, le troisième logiciel d'élaboration et de transmission 52 est adapté pour calculer le ou les signaux de commande sol parmi le troisième signal de commande à destination du système de contrôle de traction sol 17 et le quatrième signal de commande à destination du système de contrôle de freinage sol 18, pour obtenir ladite variation d'accélération sol. Le troisième signal de commande correspondra classiquement à une consigne de traction des roues du train d'atterrissage, et le quatrième signal de commande correspondra classiquement à une consigne de freinage des roues.

Chaque signal de commande sol est élaboré en fonction de la variation d'accélération sol calculée. A titre d'exemple, si la variation d'accélération sol est positive, alors les actions suivantes sont réalisées dans l'ordre jusqu'à l'obtention de la variation d'accélération sol commandée :

- le signal de commande pour le système de contrôle de freinage sol 18 est adapté pour commander une diminution du freinage ;
- le signal de commande pour le système de contrôle de freinage aérodynamique 16 est adapté pour commander une diminution du freinage aérodynamique ;
- le signal de commande pour le système de contrôle de traction sol 17 est adapté pour commander une traction positive ; et
- le signal de commande pour le système de contrôle moteur 14 est adapté pour commander une augmentation de la poussée.

Selon cet exemple et inversement, si la variation d'accélération sol est négative, alors les actions suivantes sont réalisées dans l'ordre jusqu'à l'obtention de la variation d'accélération sol commandée :

- le signal de commande pour le système de contrôle moteur 14 est adapté pour diminuer la poussée ;
- le signal de commande pour le système de contrôle de traction 17 est adapté pour commander une diminution de la traction ;
- le signal de commande pour le système de contrôle de freinage aérodynamique 16 est adapté pour commander une augmentation du freinage aérodynamique tant qu'il est efficace, c'est-à-dire tant que la vitesse air est supérieure à un seuil prédéfini ; et
- le signal de commande pour le système de contrôle de freinage sol 18 est adapté pour commander une augmentation du freinage.

En complément facultatif, selon cet exemple lorsque la variation d'accélération sol est négative, si le ou les moteurs 15 le permettent et uniquement dans la phase de décélération suivant le toucher des roues à l'atterrissage, le signal de commande est adapté pour commander une poussée négative, comme par exemple dans le cas d'une fonction « reverse » du ou des moteurs 15.

L'homme du métier comprendra que, lorsque l'aéronef 10 est au sol, les signaux de commandes pour le système de contrôle moteur 14 et le système de contrôle de freinage aérodynamique 16 sont susceptibles d'être élaborés de deux façons différentes :

- directement à partir de la variation d'accélération sol, ou bien
- en fonction d'une variation de poussée $\Delta P$ et d'une variation de trainée $\Delta T$, de manière analogue à ce qui a été décrit précédemment lorsque l'aéronef 10 est en vol, ces variations $\Delta P$ et $\Delta T$ étant alors calculées en fonction de la variation d'accélération sol, et non plus à partir de l'équation (5).

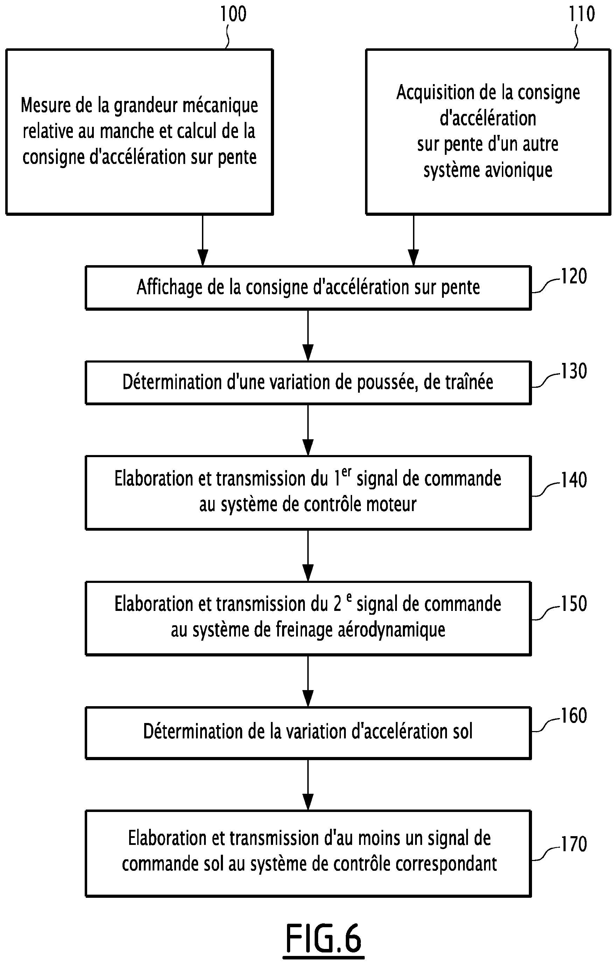

Le fonctionnement du dispositif de commande 30 selon l'invention va être à présent décrit à l'aide de la figure 6 représentant un organigramme du procédé de commande selon l'invention.

Lors d'une étape initiale 100, le logiciel de mesure et de calcul 40 commence par mesurer la grandeur mécanique D, F relative à la manette 24, puis calcule la consigne d'accélération sur pente Acc_cons à partir de la grandeur mécanique mesurée D, F. Comme décrit précédemment, la grandeur mécanique relative à la manette 24 correspond à un incrément de la consigne d'accélération sur pente Acc_cons si la valeur mesurée de la grandeur mécanique D, F est positive, et inversement à un décrément de la consigne d'accélération sur pente Acc_cons si la valeur mesurée de la grandeur mécanique D, F est négative. En variante, la grandeur mécanique D, F relative à la manette 24 correspond directement à un niveau de la consigne d'accélération sur pente Acc_cons.

Selon un autre mode de fonctionnement, la consigne d'accélération sur pente Acc_cons n'est pas déterminée à partir de la grandeur mécanique relative à la manette 24, mais est acquise lors de l'étape 110 par le logiciel d'acquisition 42 à partir d'un système avionique externe au dispositif de commande 30, tel que le dispositif de pilotage automatique 19 lorsque l'aéronef 10 est en vol, et le système de navigation aéroportuaire OANS ou à nouveau le dispositif de pilotage automatique 19 lorsque l'aéronef 10 est au sol.

La consigne d'accélération sur pente Acc_cons obtenue lors de l'étape 100 ou lors de l'étape 110 est alors affichée à l'écran 32 lors de l'étape 120, comme représenté sur la figure 4, la consigne d'accélération sur pente Acc_cons étant repérée par le symbole accélération sur pente 64. Plus précisément, la valeur de la consigne d'accélération sur pente Acc_cons correspond à l'écart algébrique en ordonnée $\Delta_2$ entre le symbole vecteur vitesse 62 et le symbole consigne d'accélération sur pente 64 dans l'exemple de réalisation de la figure 4.

Comme connu en soi, la pente sol $\gamma_s$ de l'aéronef correspond sur l'affichage représenté sur la figure 4 à l'écart algébrique en ordonnée $\Delta_1$ entre la ligne d'horizon 60 et le symbole vecteur vitesse 62.

Lors de l'étape suivante 130, le logiciel de détermination 46 détermine la variation de poussée ΔP, et en complément facultatif la variation de traînée ΔT, afin d'asservir la grandeur relative à l'aéronef par rapport à la consigne associée.

Comme décrit précédemment, et selon l'invention, la grandeur asservie est l'accélération selon la direction portée par le vecteur vitesse, celui-ci étant choisi parmi le vecteur vitesse air $V_a$ et le vecteur vitesse sol $V_s$, la consigne associée est la consigne d'accélération sur pente Acc_cons.

La grandeur asservie est de préférence l'accélération selon la direction portée par le vecteur vitesse air $V_a$.

A titre d'exemple, la valeur Acc_est estimée selon l'équation (3) de l'accélération sur pente et la valeur de la consigne d'accélération sur pente Acc_cons permettent de calculer l'écart de force ΔF selon l'équation (5), cet écart de force ΔF permettant de calculer la variation de poussée ΔP, et en complément la variation de traînée ΔT.

La variation de poussée ΔP déterminée est transmise par le logiciel de détermination 46 au premier logiciel d'élaboration et de transmission 48 qui élabore alors, lors de l'étape 140, le premier signal de commande, à partir de la valeur reçue de la variation de poussée ΔP. Le premier signal de commande est ensuite transmis par le premier logiciel d'élaboration et de transmission 48 à destination du système de contrôle moteur 14, pour obtenir ladite variation de poussée ΔP.

En complément facultatif, la variation de traînée ΔT déterminée est transmise par le logiciel de détermination 46 au deuxième logiciel d'élaboration et de transmission 50 qui élabore, de manière analogue, lors de l'étape 150, le deuxième signal de commande, à partir de la valeur reçue de la variation de traînée ΔT. Le deuxième signal de commande est ensuite transmis par le deuxième logiciel d'élaboration et de transmission 50 à destination du système de contrôle de freinage aérodynamique 16, pour obtenir ladite variation de traînée ΔT.

En complément facultatif encore, lorsque l'aéronef 10 est au sol, par exemple pendant la phase de roulage après l'atterrissage, le dispositif de commande 30 est adapté pour calculer de manière analogue des signaux de commande sol à destination du système de contrôle de traction sol 17, respectivement du système de contrôle de freinage sol 18.

Lors de l'étape 160, le logiciel de détermination 46 détermine alors la variation d'accélération sol, afin d'asservir la grandeur relative à l'aéronef par rapport à la consigne associée. Comme décrit précédemment, lorsque l'aéronef 10 est au sol, la grandeur asservie est la valeur estimée de l'accélération sur pente Acc_est qui correspond à l'accélération longitudinale, le vecteur vitesse sol $V_s$ et le vecteur vitesse air $V_a$ étant dirigés suivant la même direction dans le plan vertical, la pente sol $\gamma_s$ et la pente air $\gamma_a$ étant identiques, et la consigne associée est la consigne d'accélération sur pente Acc_cons qui correspond alors à la consigne d'accélération longitudinale de l'aéronef 10.

Lors de l'étape suivante 170, la variation d'accélération sol déterminée est transmise par le logiciel de détermination 46 au troisième logiciel d'élaboration et de transmission 52 qui élabore alors le troisième signal de commande et/ou le quatrième signal de commande, à partir de la valeur reçue de la variation d'accélération sol. Le troisième signal de commande et/ou le quatrième signal de commande sont ensuite transmis par le troisième logiciel d'élaboration et de transmission 52 à destination du système de contrôle de traction sol 17 et/ou du système de contrôle de freinage sol 18, pour obtenir ladite variation d'accélération sol.

Ainsi, le dispositif de commande 30 selon l'invention permet alors, en utilisant comme grandeur asservie l'accélération selon la direction portée par le vecteur vitesse choisi parmi le vecteur vitesse air $V_a$ et le vecteur vitesse sol $V_s$, dite accélération sur pente, de commander le système de contrôle d'actionneur 14, 16 de manière asservie par rapport à ladite accélération sur pente, de sorte qu'une évolution de la trajectoire ou des conditions de vol entraînant un changement de pente de l'aéronef sera, à la différence des dispositifs de l'état de la technique, compensée par une variation de régime moteur pour tenir ladite accélération sur pente.

En complément facultatif, lorsque l'aéronef 10 est au sol, le dispositif de commande 30 permet également de commander le système de contrôle de traction sol 17 et le système de contrôle de freinage sol 18.

Le dispositif de commande 30 selon l'invention permet d'agir sur la poussée P, et de façon optionnelle la traînée T, et de façon optionnelle encore lorsque l'aéronef est au sol sur la force de traction R et/ou sur la force de freinage B, de manière automatique et permanente, tout en améliorant la sécurité du vol, un changement de pente de l'aéronef étant automatiquement compensé de manière à éviter une variation indésirable de l'accélération sur pente de l'aéronef.

En outre, la caractéristique selon laquelle la grandeur asservie est la même pour déterminer à la fois la variation de poussée et en complément la variation de traînée, de même que la consigne est unique, permet de compenser un éventuel changement de pente de l'aéronef 10 de manière coordonnée et centralisée à partir de cette unique consigne d'accélération sur pente Acc_cons.

La caractéristique selon laquelle la consigne d'accélération sur pente Acc_cons est calculée à partir de la grandeur mécanique D, F relative à la manette 24 permet en outre de proposer une interface simplifiée avec l'équipage 26, et plus précisément permet de faciliter la sélection de la valeur de consigne désirée par l'équipage 26. Deux modes de sélection sont en outre proposés, la grandeur mécanique D, F relative à la manette 24 correspondant soit à un incrément/décrément de la consigne d'accélération sur pente Acc_cons, soit directement à un niveau de la consigne d'accélération sur pente Acc_cons.

La caractéristique selon laquelle le dispositif de commande 30 permet également d'asservir l'accélération sur pente Acc_cons au sol en commandant le système de contrôle de traction sol 17 et/ou le système de contrôle de freinage sol 18 permet une continuité dans l'utilisation de la manette 24 durant toutes les phases d'un vol, au sol comme en vol, et permet de réduire la charge de travail lors des phases au sol, i.e. lors des phases de roulage, d'atterrissage et de décollage.

On conçoit ainsi que le procédé de commande et le dispositif de commande 30 selon l'invention permettent d'améliorer la sécurité du vol de l'aéronef 10 et de diminuer la charge de travail pour l'équipage 26, notamment en tenant compte de l'évolution de la trajectoire ou des conditions de vol et en proposant un dispositif de pilotage utilisable en vol comme au sol.

**Revendications**

1. Procédé de commande d'au moins un système de contrôle d'actionneur (14, 16, 17, 18) d'un aéronef (10) pour agir sur une force (P, T, R, B) appliquée à l'aéronef (10), l'aéronef (10) présentant un vecteur vitesse air ($V_a$) et un vecteur vitesse sol ($V_s$), l'aéronef (10) comportant au moins un moteur (15) et un système de contrôle moteur (14) pour faire varier une force de poussée (P) générée par le ou les moteurs (15), le système de contrôle moteur (14) formant un premier système de contrôle d'actionneur,

le procédé étant mis en oeuvre par un dispositif électronique de commande (30) et comprenant les étapes suivantes :

- la détermination (130) d'une variation de poussée ($\Delta P$) de l'aéronef pour asservir une grandeur relative à l'aéronef par rapport à une consigne (Acc_cons),
- l'élaboration (140) d'un premier signal de commande à destination du système de contrôle moteur (14) pour obtenir ladite variation de poussée ($\Delta P$), et la transmission dudit premier signal de commande audit système de contrôle moteur (14),

**caractérisé en ce que** la grandeur asservie est une accélération selon une direction portée par un vecteur vitesse parmi le vecteur vitesse air ($V_a$) et le vecteur vitesse sol ($V_s$), et la consigne est une consigne d'accélération selon ladite direction (Acc_cons).

2. Procédé selon la revendication 1, dans lequel la grandeur asservie est une accélération selon la direction portée par le vecteur vitesse air ($V_a$), et la consigne est une consigne d'accélération selon ladite direction.

3. Procédé selon la revendication 1 ou 2, dans lequel l'aéronef (10) comporte en outre un système de contrôle de freinage aérodynamique (16) pour agir sur une force de traînée (T) sur l'aéronef, le système de contrôle de freinage aérodynamique (16) formant un deuxième système de contrôle d'actionneur, et dans lequel le procédé comprend en outre les étapes suivantes :

- la détermination (130) d'une variation de traînée ($\Delta T$) de l'aéronef pour asservir ladite grandeur relative à l'aéronef par rapport à la consigne (Acc_cons),
- l'élaboration (150) d'un deuxième signal de commande à destination du système de contrôle de freinage aérodynamique (16) pour obtenir ladite variation de traînée ($\Delta T$), et la transmission dudit deuxième signal de commande audit système de contrôle de freinage aérodynamique (16).

4. Procédé selon l'une quelconque des revendications précédentes, dans lequel l'aéronef (10) comporte en outre des roues, et un système de contrôle parmi un système de contrôle de traction sol (17) et un système de contrôle de freinage sol (18) pour agir sur au moins une force parmi une force de traction (R) et une force de freinage (B) exercées au sol par les roues, le système de contrôle de traction sol (17) formant un troisième système de contrôle d'actionneur et le système de contrôle de freinage sol (18) formant un quatrième système de contrôle d'actionneur, et dans lequel le procédé comprend en outre les étapes suivantes :

- la détermination (160) d'une variation d'accélération de l'aéronef au sol pour asservir ladite grandeur relative à l'aéronef par rapport à la consigne (Acc_cons),
- l'élaboration (170) d'au moins un signal de commande sol parmi un troisième signal de commande à destination du système de contrôle de traction sol (17) et un quatrième signal de commande à destination du système de contrôle de freinage sol (18), pour obtenir ladite variation d'accélération sol, et la transmission de chaque signal de commande sol au système de contrôle (17, 18) correspondant.

**5.** Procédé selon l'une quelconque des revendications précédentes, dans lequel la variation déterminée (ΔP, ΔT) est fonction d'une valeur estimée de la grandeur asservie (Acc_est), et la valeur estimée de la grandeur asservie (Acc_est) dépend d'au moins une valeur parmi une dérivée temporelle estimée d'une vitesse air mesurée (TAS) et une accélération estimée (FPA_ACC) selon la direction portée par un vecteur vitesse choisi parmi le vecteur vitesse air ($V_a$) et le vecteur vitesse sol ($V_s$).

**6.** Procédé selon l'une quelconque des revendications précédentes, dans lequel l'aéronef (10) comprend en outre un levier de commande (24), et

dans lequel le procédé comprend en outre une étape (100) de mesure d'une grandeur mécanique (D, F) relative au levier de commande (24) et de calcul d'une valeur de la consigne d'accélération (Acc_cons) en fonction de la grandeur mécanique mesurée (D, F).

**7.** Procédé selon la revendication 6, dans lequel la valeur de la consigne d'accélération (Acc_cons) est calculée de manière itérative, en fonction de la grandeur mécanique mesurée (D, F) et d'une valeur précédente de ladite consigne d'accélération (Acc_cons).

**8.** Procédé selon l'une quelconque des revendications précédentes, dans lequel l'aéronef (10) comprend en outre un levier de commande (24), le levier de commande (24) comportant au moins une position prédéterminée de référence, et

dans lequel, lorsque le levier de commande (24) est positionné selon une position prédéterminée correspondante de référence, la valeur de la consigne d'accélération (Acc_cons) est égale à une valeur prédéfinie associée à ladite position prédéterminée de référence.

**9.** Procédé selon l'une quelconque des revendications précédentes, dans lequel l'aéronef (10) comprend en outre un système avionique adapté pour générer la consigne d'accélération (Acc_cons), et

dans lequel la valeur de la consigne d'accélération (Acc_cons) est reçue dudit système avionique.

**10.** Procédé selon l'une quelconque des revendications précédentes, dans lequel l'aéronef (10) comprend en outre un écran d'affichage (32), et

dans lequel le procédé comprend en outre une étape (120) d'affichage, à l'écran (32), de la valeur de la consigne d'accélération (Acc_cons).

**11.** Procédé selon la revendication 10, dans lequel l'étape d'affichage (120) comporte l'affichage d'un symbole de référence (62) et d'un symbole consigne d'accélération sur pente (64), l'écart algébrique ($\Delta_2$) en ordonnée entre le symbole de référence (62) et le symbole consigne d'accélération sur pente (64) représentant la valeur de la consigne d'accélération (Acc_cons).

**12.** Produit programme d'ordinateur comportant des instructions logicielles qui, lorsqu'elles sont mises en oeuvre par un ordinateur, mettent en oeuvre le procédé selon l'une quelconque des revendications précédentes.

**13.** Dispositif électronique (30) de commande d'au moins un système de contrôle d'actionneur (14, 16, 17, 18) d'un aéronef (10) pour agir sur une force (P, T, R, B) appliquée à l'aéronef (10), l'aéronef (10) présentant un vecteur vitesse air ($V_a$) et un vecteur vitesse sol ($V_s$), l'aéronef (10) comportant au moins un moteur (15) et un système de contrôle moteur (14) pour faire varier une force de poussée (P) générée par le ou les moteurs (15), le système de contrôle moteur (14) formant un premier système de contrôle d'actionneur,

le dispositif de commande (30) comprenant :

- des moyens (46) de détermination d'une variation de poussée (ΔP) de l'aéronef pour asservir une grandeur relative à l'aéronef par rapport à une consigne (Acc_cons),
- des moyens (48) d'élaboration d'un premier signal de commande à destination du système de contrôle moteur (14) pour obtenir ladite variation de poussée (ΔP), et de transmission dudit premier signal de commande audit système de contrôle moteur (14),

**caractérisé en ce que** la grandeur asservie est une accélération selon une direction portée par un vecteur vitesse parmi le vecteur vitesse air ($V_a$) et le vecteur vitesse sol ($V_s$), et la consigne est une consigne d'accélération selon ladite direction (Acc_cons).

**14.** Dispositif (30) selon la revendication 13, dans lequel l'aéronef (10) comporte en outre un système de contrôle de freinage aérodynamique (16) pour agir sur une force de traînée (T) sur l'aéronef, le système de contrôle de freinage aérodynamique (16) formant un deuxième système de contrôle d'actionneur,

dans lequel les moyens de détermination (46) sont en outre adaptés pour déterminer une variation de traînée (ΔT) de l'aéronef pour asservir ladite grandeur relative à l'aéronef par rapport à la consigne (Acc_cons), et

le dispositif (30) comprend en outre des moyens (50) d'élaboration d'un deuxième signal de commande à destination du système de contrôle de freinage aérodynamique (16) pour obtenir ladite variation de traînée (ΔT), et de transmission dudit deuxième signal de commande audit système de contrôle de freinage aérodynamique (16).

**15.** Dispositif (30) selon la revendication 13 ou 14, dans lequel l'aéronef (10) comporte en outre des roues, et un système de contrôle parmi un système de contrôle de traction sol (17) et un système de contrôle de freinage sol (18) pour agir sur au moins une force parmi une force de traction (R) et une force de freinage (B) exercées au sol par les roues, le système de contrôle de traction sol (17) formant un troisième système de contrôle d'actionneur et le système de contrôle de freinage sol (18) formant un quatrième système de contrôle d'actionneur, et

dans lequel les moyens de détermination (46) sont en outre adaptés pour déterminer une variation d'accélération de l'aéronef au sol pour asservir ladite grandeur relative à l'aéronef par rapport à la consigne (Acc_cons), et le dispositif (30) comprend en outre des moyens (52) d'élaboration d'au moins un signal de commande sol parmi un troisième signal de commande à destination du système de contrôle de traction sol (17) et un quatrième signal de commande à destination du système de contrôle de freinage sol (18), pour obtenir ladite variation d'accélération sol, et la transmission de chaque signal de commande sol au système de contrôle (17, 18) correspondant.

**16.** Aéronef (10), tel qu'un avion, comprenant :

- au moins un moteur (15),
- des roues,
- un système de contrôle moteur (14), pour faire varier une force de poussée (P) générée par le ou les moteurs (15), le système de contrôle moteur (14) formant un premier système de contrôle d'actionneur,
- un système de contrôle de freinage aérodynamique (16), tel qu'un système d'aérofrein ou un système de déportance, pour agir sur une force de traînée (T) sur l'aéronef, le système de contrôle de freinage aérodynamique (16) formant un deuxième système de contrôle d'actionneur,
- un système de contrôle de traction sol (17) pour agir sur une force de traction (R) exercée au sol par les roues, le système de contrôle de traction sol (17) formant un troisième système de contrôle d'actionneur,
- un système de contrôle de freinage sol (18) pour agir sur une force de freinage (B) exercée au sol par les roues, le système de contrôle de freinage sol (18) formant un quatrième système de contrôle d'actionneur,
- un dispositif électronique (30) de commande d'au moins l'un des systèmes de contrôle d'actionneur (14, 16, 17, 18) pour agir sur une force (P, T, R, B) appliquée à l'aéronef,

**caractérisé en ce que** le dispositif de commande (30) est conforme à l'une quelconque des revendications 13 à 15.

**Patentansprüche**

**1.** Verfahren zur Steuerung wenigstens eines Aktuator-Steuerungssystems (14, 16, 17, 28) eines Luftfahrzeugs (10) zum Einwirken auf eine Kraft (P, T, R, B), die auf das Luftfahrzeug (10) ausgeübt wird, wobei das Luftfahrzeug (10) einen Anströmgeschwindigkeitsvektor (Va) und einen Geschwindigkeit-über-Grund-Vektor (Vs) hat, wobei das Luftfahrzeug (10) aufweist wenigstens einen Motor (15) und ein Motor-Steuerungssystem (14) zum Variieren einer Schubkraft (P), die von dem oder den Motoren (15) erzeugt wird, wobei das Motor-Steuerungssystem (14) ein erstes Aktuator-Steuerungssystem bildet,

wobei das Verfahren durchgeführt wird durch eine elektronische Steuervorrichtung (30) und die folgenden Schritte aufweist:

- die Bestimmung (130) einer Variation des Schubs (ΔP) des Luftfahrzeugs zum Regeln einer Größe bezüglich des Luftfahrzeugs im Verhältnis zu einem Sollwert (Acc_cons),
- die Berechnung (140) eines ersten Steuersignals für das Motor-Steuerungssystem (14) zum Erzielen der besagten Schub-Variation (ΔP), und die Übermittlung des besagten ersten Steuersignals an das Motor-Steuerungssystem (14),

**dadurch gekennzeichnet, dass** die geregelte Größe eine Beschleunigung in eine Richtung ist, die von einem Geschwindigkeitsvektor unter dem Anströmgeschwindigkeitsvektor (Va) und dem Geschwindigkeit-über-Grund-Vektor (Vs) bestimmt ist, und der Sollwert ein Beschleunigungssollwert entlang der besagten Richtung (Acc_cons) ist.

2. Verfahren gemäß Anspruch 1, wobei die geregelte Größe eine Beschleunigung entlang der Richtung ist, die von dem Anströmgeschwindigkeitsvektor (Va) bestimmt ist, und der Sollwert ein Beschleunigungssollwert entlang dieser Richtung ist.

3. Verfahren gemäß Anspruch 1 oder 2, wobei das Luftfahrzeug (10) ferner ein Aerodynamische-Bremse-Steuerungssystem (16) zum Einwirken auf eine Luftwiderstandskraft (T) auf das Luftfahrzeug aufweist, wobei das Aerodynamische-Bremse-Steuerungssystem (16) ein zweites Aktuator-Steuerungssystem bildet, und wobei das Verfahren ferner die folgenden Schritte aufweist:

- die Bestimmung (130) einer Variation des Luftwiderstands ($\Delta T$) des Luftfahrzeugs zum Regeln der besagten Größe bezüglich des Luftfahrzeugs im Verhältnis zu dem Sollwert (Acc_cons),
- die Berechnung (150) eines zweiten Steuersignals für das Aerodynamische-Bremse-Steuerungssystem (16) zum Erzielen der besagten Luftwiderstand-Variation ($\Delta T$), und die Übermittlung des besagten zweiten Steuersignals an das Aerodynamische-Bremse-Steuerungssystem (16).

4. Verfahren gemäß irgendeinem der vorhergehenden Ansprüche, wobei das Luftfahrzeug (10) ferner aufweist Räder und ein Steuerungssystem unter einem Bodenfahrantrieb-Steuerungssystem (17) und einem Bodenbrems-Steuerungssystem (18) zum Einwirken auf wenigstens eine Kraft unter einer Fahrantriebs-Kraft (R) und einer Bremskraft (B), die von den Rädern auf den Boden ausgeübt werden, wobei das Bodenfahrantrieb-Steuerungssystem (17) ein drittes Aktuator-Steuerungssystem bildet und das Bodenbrems-Steuerungssystem (18) ein viertes Aktuator-Steuerungssystem bildet, und wobei das Verfahren ferner die folgenden Schritte aufweist:

- die Bestimmung (160) einer Variation der Boden-Beschleunigung des Luftfahrzeugs zum Regeln der besagten Größe bezüglich des Luftfahrzeugs im Verhältnis zu dem Sollwert (Acc_cons),
- die Berechnung (170) wenigstens eines Bodensteuersignals unter einem dritten Steuersignal für das Bodenfahrantrieb-Steuerungssystem (17) und einem vierten Steuersignal für das Bodenbrems-Steuerungssystem (18), zum Erzielen der besagten Bodenbeschleunigung-Variation, und die Übermittlung des jeweiligen Bodensteuersignals an das korrespondierende Steuerungssystem (17, 18).

5. Verfahren gemäß irgendeinem der vorhergehenden Ansprüche, wobei die bestimmte Variation ($\Delta P$, $\Delta T$) abhängig ist von einem Wert, der aus der geregelten Größe berechnet wird (Acc_est), wobei der Wert, der aus der geregelten Größe berechnet wird (Acc_est), abhängt von wenigstens einem Wert unter einer zeitlichen Ableitung, die berechnet wird aus einer gemessenen Anströmgeschwindigkeit (TAS), und einer berechneten Beschleunigung (FPA_ACC) entlang der Richtung, die durch einen Geschwindigkeitsvektor bestimmt ist, der ausgewählt ist unter dem Anströmgeschwindigkeitsvektor (Va) und dem Geschwindigkeit-über-Grund-Vektor (Vs).

6. Verfahren gemäß irgendeinem der vorhergehenden Ansprüche, wobei das Luftfahrzeug (10) ferner aufweist einen Steuerhebel (24), und wobei das Verfahren ferner aufweist einen Schritt (100) des Messens einer mechanischen Größe (D, F) bezüglich des Steuerhebels (24) und des Berechnens eines Werts des Beschleunigungssollwerts (Acc_cons) in Abhängigkeit von der gemessenen mechanischen Größe (D, F).

7. Verfahren gemäß Anspruch 6, wobei der Wert des Beschleunigungssollwerts (Acc_cons) auf iterative Weise berechnet wird in Abhängigkeit von der gemessenen mechanischen Größe (D, F) und von einem vorhergehenden Wert des besagten Beschleunigungssollwerts (Acc_cons).

8. Verfahren gemäß irgendeinem der vorhergehenden Ansprüche, wobei das Luftfahrzeug (10) ferner aufweist einen Steuerhebel (24), wobei der Steuerhebel (24) wenigstens eine vorbestimmte Referenzposition aufweist, und wobei, wenn der Steuerhebel (24) gemäß einer korrespondierenden vorbestimmten Referenzposition positioniert ist, der Wert des Beschleunigungssollwerts (Acc_cons) gleich einem vordefinierten Wert ist, der der besagten vorbestimmten Referenzposition zugeordnet ist.

9. Verfahren gemäß irgendeinem der vorhergehenden Ansprüche, wobei das Luftfahrzeug (10) ferner ein Avionik-System aufweist, das angepasst ist zum Erzeugen des Beschleunigungssollwerts (Acc_cons), und wobei der Wert des Beschleunigungssollwerts (Acc_cons) von dem besagten Avionik-System erhalten wird.

**EP 2 957 975 B1**

10. Verfahren gemäß irgendeinem der vorhergehenden Ansprüche, wobei das Luftfahrzeug (10) ferner aufweist einen Anzeigebildschirm (32), und
wobei das Verfahren ferner einen Schritt (120) des Anzeigens, auf dem Bildschirm (32) des Werts des Beschleunigungssollwerts (Acc_cons) aufweist.

11. Verfahren gemäß Anspruch 10, wobei der Schritt des Anzeigens (120) aufweist das Anzeigen eines Referenzsymbols (62) und eines Beschleunigungssollwert-Symbols auf dem künstlichen Horizont (64), wobei der algebraische Abstand ($\Delta_2$) in der Ordinate zwischen dem Referenzsymbol (62) und dem Beschleunigungssollwert-Symbol auf dem künstlichen Horizont (64) den Wert des Beschleunigungssollwerts (Acc_cons) repräsentiert.

12. Computerprogrammprodukt, aufweisend Programmanweisungen, die, wenn sie auf einem Rechner ausgeführt werden, das Verfahren gemäß irgendeinem der vorhergehenden Ansprüche durchführen.

13. Elektronische Vorrichtung (30) zur Steuerung wenigstens eines Aktuator-Steuerungssystems (14, 16, 17, 18) eines Luftfahrzeugs (10) zum Einwirken auf eine Kraft (P, T, R, B), die auf das Luftfahrzeug (10) ausgeübt wird, wobei das Luftfahrzeug (10) einen Anströmgeschwindigkeitsvektor (Va) und einen Geschwindigkeit-über-Grund-Vektor (Vs) hat, wobei das Luftfahrzeug (10) aufweist wenigstens einen Motor (15) und ein Motor-Steuerungssystem (14) zum Variieren einer Schubkraft (P), die von dem oder den Motoren (15) erzeugt wird, wobei das Motor-Steuerungssystem (14) ein erstes Aktuator-Steuerungssystem bildet,
wobei die Vorrichtung zur Steuerung (30) aufweist:

- Mittel (46) zur Bestimmung einer Variation des Schubs ($\Delta$P) des Luftfahrzeugs zum Regeln einer Größe bezüglich des Luftfahrzeugs im Verhältnis zu einem Sollwert (Acc_cons),
- Mittel (48) zur Berechnung eines ersten Steuersignals für das Motor-Steuerungssystem (14) zum Erzielen der besagten Schub-Variation ($\Delta$P), und zur Übermittlung des besagten ersten Steuersignals an das Motor-Steuerungssystem (14),

**dadurch gekennzeichnet, dass** die geregelte Größe eine Beschleunigung in eine Richtung ist, die von einem Geschwindigkeitsvektor unter dem Anströmgeschwindigkeitsvektor (Va) und dem Geschwindigkeit-über-Grund-Vektor (Vs) bestimmt ist, und der Sollwert ein Beschleunigungssollwert entlang der besagten Richtung (Acc_cons) ist.

14. Vorrichtung (30) gemäß Anspruch 13, wobei das Luftfahrzeug (10) ferner ein Aerodynamische-Bremse-Steuerungssystem (16) zum Einwirken auf eine Luftwiderstandskraft (T) auf das Luftfahrzeug aufweist, wobei das Aerodynamische-Bremse-Steuerungssystem (16) ein zweites Aktuator-Steuerungssystem bildet, wobei
die Mittel zur Bestimmung (46) ferner angepasst sind zum Bestimmen einer Variation des Luftwiderstands ($\Delta$T) des Luftfahrzeugs zum Regeln der besagten Größe bezüglich des Luftfahrzeugs im Verhältnis zu dem Sollwert (Acc_cons),
wobei die Vorrichtung (30) ferner Mittel (50) zur Berechnung eines zweiten Steuersignals für das Aerodynamische-Bremse-Steuerungssystem (16) zum Erzielen der besagten Luftwiderstand-Variation ($\Delta$T), und zur Übermittlung des besagten zweiten Steuersignals an das Aerodynamische-Bremse-Steuerungssystem (16) aufweist.

15. Vorrichtung (30) gemäß Anspruch 13 oder 14, wobei das Luftfahrzeug (10) ferner aufweist Räder und ein Steuerungssystem unter einem Bodenfahrantrieb-Steuerungssystem (17) und einem Bodenbrems-Steuerungssystem (18) zum Einwirken auf wenigstens eine Kraft unter einer Fahrantriebs-Kraft (R) und einer Bremskraft (B), die von den Rädern auf den Boden ausgeübt werden, wobei das Bodenfahrantrieb-Steuerungssystem (17) ein drittes Aktuator-Steuerungssystem bildet und das Bodenbrems-Steuerungssystem (18) ein viertes Aktuator-Steuerungssystem bildet, und
wobei die Mittel zur Bestimmung (46) ferner dazu angepasst sind zum Bestimmen einer Variation der Boden-Beschleunigung des Luftfahrzeugs zum Regeln der besagten Größe bezüglich des Luftfahrzeugs im Verhältnis zu dem Sollwert (Acc_cons), und
wobei die Vorrichtung (30) ferner aufweist Mittel (52) zur Berechnung wenigstens eines Bodensteuersignals unter einem dritten Steuersignal für das Bodenfahrantrieb-Steuerungssystem (17) und einem vierten Steuersignal für das Bodenbrems-Steuerungssystem (18), zum Erzielen der besagten Bodenbeschleunigung-Variation, und zur Übermittlung des jeweiligen Bodensteuersignals an das korrespondierende Steuerungssystem (17, 18).

16. Luftfahrzeug (10), wie z.B. ein Flugzeug, aufweisend:

- wenigstens einen Motor (15),

**17**

- Räder,
- ein Motor-Steuerungssystem (14) zum Variieren einer Schubkraftkraft (P), die von dem oder den Motoren (15) erzeugt wird, wobei das Motor-Steuerungssystem (14) ein erstes Aktuator-Steuerungssystem bildet,
- ein Aerodynamische-Bremse-Steuerungssystem (16), wie z.B. ein Luftbremssystem oder ein Spoiler-System, zum Einwirken auf eine Luftwiderstandskraft (T) auf das Luftfahrzeug, wobei das Aerodynamische-Bremse-Steuerungssystem (16) ein zweites Aktuator-Steuerungssystem bildet,
- ein Bodenfahrantrieb-Steuerungssystem (17) zum Einwirken auf eine Fahrantriebs-Kraft (R), die von den Rädern auf den Boden ausgeübt wird, wobei das Bodenfahrantrieb-Steuerungssystem (17) ein drittes Aktuator-Steuerungssystem bildet,
- ein Bodenbrems-Steuerungssystem (18) zum Einwirken auf eine Bremskraft (B), die von den Rädern auf den Boden ausgeübt wird, wobei das Bodenbrems-Steuerungssystem (18) ein viertes Aktuator-Steuerungssystem bildet,
- eine elektronischen Vorrichtung (30) zur Steuerung wenigstens eines von den Aktuator-Steuerungssystemen (14, 16, 17, 18) zum Einwirken auf die Kraft (P, T, R, B), die auf das Flugzeug ausgeübt wird,

**dadurch gekennzeichnet, dass** die Vorrichtung zur Steuerung (30) gemäß einer irgendeines der Ansprüche 13 bis 15 ist.

## Claims

1. A method for controlling at least one actuator control system (14, 16, 17, 18) of an aircraft (10) for acting on a force (P, T, R, B) applied to the aircraft (10), the aircraft (10) having an air speed vector ($V_a$) and a ground speed vector ($V_s$), the aircraft (10) having at least one engine (15) and an engine control system (14) for causing the varying of a thrust force (P) generated by the engine or engines (15), the engine control system (14) forming a first actuator control system;
the method being implemented by an electronic control device (30) and comprising the following steps:

   - determination (130) of a variation in thrust ($\Delta P$) of the aircraft for controlling a variable relating to the aircraft relative to a set point (Acc_cons);
   - calculation (140) of a first control command signal to be sent to the engine control system (14) in order to obtain said variation in thrust ($\Delta P$), and transmission of said first control command signal to said engine control system (14);

   **characterised in that** the controlled variable is an acceleration along a direction taken by a speed vector among the air speed vector ($V_a$) and the ground speed vector ($V_s$), and the set point is an acceleration set point along said direction (Acc_cons).

2. A method according to claim 1, wherein the controlled variable is an acceleration along the direction taken by the air speed vector ($V_a$), and the set point is an acceleration set point along said direction.

3. A method according to claim 1 or 2, wherein the aircraft (10) further includes an aerodynamic brake control system (16) for acting on a drag force (T) on the aircraft, the aerodynamic brake control system (16) forming a second actuator control system, and
wherein the method further includes the following steps:

   - determination (130) of a variation in drag ($\Delta T$) of the aircraft for controlling said variable relating to the aircraft relative to the set point (Acc_cons);
   - calculation (150) of a second control command signal to be sent to the aerodynamic brake control system (16) in order to obtain said variation in drag ($\Delta T$), and the transmission of said second control command signal to said aerodynamic brake control system (16).

4. A method according to any one of the preceding claims, wherein the aircraft (10) further comprises wheels and a control system among a ground traction control system (17) and a ground brake control system (18) for acting on at least one force among a tractive force (R) and a braking force (B) exerted on the ground by the wheels, with the ground traction control system (17) forming a third actuator control system and the ground brake control system (18) forming a fourth actuator control system ; and
wherein the method also includes the following steps:

- determination (160) of a variation in acceleration of the aircraft on the ground for controlling said variable relating to the aircraft relative to the set point (Acc_cons);
- calculation (170) of at least one ground control command signal among a third control command signal to be sent to the ground traction control system (17) and a fourth control command signal to be sent to the ground brake control system (18) in order to obtain said variation in ground acceleration, and the transmission of each ground control command signal to the corresponding control system (17, 18).

5. A method according to any one of the preceding claims, wherein the variation determined ($\Delta P$, AT) is a function of an estimated value of the controlled variable (Acc_est), and the estimated value of the controlled variable (Acc_est) depends on at least one value among an estimated time derivative of a measured air speed (TAS) and an estimated acceleration (FPA_ACC) along the direction taken by a speed vector selected from the air speed vector ($V_a$) and the ground speed vector ($V_s$).

6. A method according to any one of the preceding claims, wherein the aircraft (10) further comprises a control lever (24); and
wherein the method further includes a measurement and calculation step (100), for measuring a mechanical variable value (D, F) relative to the control lever (24) and calculating an acceleration set point value (Acc_cons) as a function of the measured mechanical variable value (D, F).

7. A method according to claim 6, wherein the value of the set point acceleration (Acc_cons) is calculated in an iterative manner, as a function of the measured mechanical variable value (D, F) and a previous value of said acceleration set point (Acc_cons).

8. A method according to any one of the preceding claims, wherein the aircraft (10) further comprises a control lever (24), the control lever (24) including at least one predetermined reference position; and
wherein, when the control lever (24) is positioned in a corresponding predetermined reference position, the value of the acceleration set point (Acc_cons) is equal to a predefined value associated with said predetermined reference position.

9. A method according to any one of the preceding claims, wherein the aircraft (10) further comprises an avionics system capable of generating the acceleration set point (Acc_cons), and
wherein the value of the acceleration set point (Acc_cons) is received from said avionics system.

10. A method according to any one of the preceding claims, wherein the aircraft (10) further comprises a display screen (32); and
wherein the method further includes a display step (120) for displaying, on the screen (32), the value of the acceleration set point (Acc_cons).

11. A method according to claim 10, wherein the display step (120) includes the displaying of a reference symbol (62) and an acceleration on slope set point symbol (64), the algebraic deviation ($\Delta_2$) on the ordinate between the reference symbol (62) and the acceleration on slope set point symbol (64) representing the value of the acceleration set point (Acc_cons).

12. A computer program product comprising of software instructions that, when carried out by a computer, implement the method according to any one of the preceding claims.

13. An electronic control device (30) for controlling at least one actuator control system (14, 16, 17, 18) of an aircraft (10) for acting on a force (P, T, R, B) applied to the aircraft (10), the aircraft (10) having an air speed vector ($V_a$) and a ground speed vector ($V_s$), the aircraft (10) comprising at least one engine (15) and an engine control system (14) for causing the varying of a thrust force (P) generated by the engine or engines (15), with the engine control system (14) forming a first actuator control system ;
the control device (30) comprising:

- determination means (46) for determining a variation in thrust ($\Delta P$) of the aircraft for controlling a variable relating to the aircraft relative to a set point (Acc_cons);
- calculation and transmission means (48) for calculating a first control command signal to be sent to the engine control system (14) in order to obtain said variation in thrust ($\Delta P$), and for transmitting said first control command signal to said engine control system (14);

**characterised in that** the controlled variable is an acceleration along a direction taken by a speed vector among the air speed vector($V_a$) and the ground speed vector ($V_s$), and the set point is an acceleration set point along said direction (Acc_cons).

14. An electronic control device (30) according to claim 13, wherein the aircraft (10) further comprises an aerodynamic brake control system (16) for acting on a drag force (T) on the aircraft, with the aerodynamic brake control system (16) forming a second actuator control system;

   wherein the determination means (46) are further capable of determining a variation in drag (AT) of the aircraft for controlling said variable relating to the aircraft relative to the set point (Acc_cons); and

   the device (30) further comprises calculation and transmission means (50) for calculating a second control command signal to be sent to the aerodynamic brake control system (16) in order to obtain said variation in drag ($\Delta T$), and for transmitting said second control command signal to said aerodynamic brake control system (16).

15. An electronic control device (30) according to claim 13 or 14, wherein the aircraft (10) further comprises wheels and a control system among a ground traction control system (17) and a ground brake control system (18) for acting on at least one force among a tractive force (R) and a braking force (B) exerted on the ground by the wheels, with the ground traction control system (17) forming a third actuator control system and the ground brake control system (18) forming a fourth actuator control system; and

   wherein the determination means (46) are further capable of determining a variation in acceleration of the aircraft on the ground for controlling said variable relating to the aircraft relative to the set point (Acc_cons); and

   the device (30) further comprises calculation and transmission means (52) for calculating at least one ground control command signal among a third control command signal to be sent to the ground traction control system (17) and a fourth control command signal to be sent to the ground brake control system (18) in order to obtain said variation in ground acceleration, and for transmitting each ground control command signal to the corresponding control system (17, 18).

16. An aircraft (10), such as an airplane, comprising:

   - at least one engine (15);
   - wheels;
   - an engine control system (14), for causing the varying of a thrust force (P) generated by the engine or engines (15), with the engine control system (14) forming a first actuator control system;
   - an aerodynamic brake control system (16), such as an air brake system or a negative lift or down force system, for acting on a drag force (T) on the aircraft, the aerodynamic brake control system (16) forming a second actuator control system;
   - a ground traction control system (17) for acting on a tractive force (R) exerted on the ground by the wheels, the ground traction control system (17) forming a third actuator control system;
   - a ground brake control system (18) for acting on a braking force (B) exerted on the ground by the wheels, the ground brake control system (18) forming a fourth actuator control system;
   - an electronic control device (30) for controlling at least one of the actuator control systems (14, 16, 17, 18) for acting on a force (P, T, R, B) applied to the aircraft;

   **characterised in that** the electronic control device (30) is according to any one of claims 13 to 15.

## FIG.1

## FIG.2

FIG.3

FIG.4

FIG.5

**FIG.6**

**EP 2 957 975 B1**

## RÉFÉRENCES CITÉES DANS LA DESCRIPTION

**Documents brevets cités dans la description**

- US 20110238277 A1
- US 6262674 B1
- US 5079711 A